# EUROPÄISCHE PATENTSCHRIFT

(11) **EP 2 910 813 B1**
(45) Veröffentlichungstag und Bekanntmachung des Hinweises auf die Patenterteilung: **17.07.2019**
(21) Anmeldenummer: 14004206.0
(22) Anmeldetag: 12.12.2014
(51) Int. Cl.: F16F 15/14, F16F 15/18, F16F 15/30

(54) **Dämpfungssystem mit Energierückgewinnung für ein Kraftfahrzeug und Antriebsvorrichtung mit einem derartigen Dämpfungssystem**
Damping system with energy recovery for a motor vehicle and drive device using such a damping system
Système d'amortissement à récupération d'énergie pour un véhicule automobile et dispositif d'entraînement doté d'un tel système d'amortissement

(30) Priorität: 05.02.2014 DE 102014001425
(43) Veröffentlichungstag der Anmeldung: 26.08.2015
(73) Patentinhaber: MAN Truck & Bus SE, 80995 München (DE)
(72) Erfinder: Tröbst, Steffen, 07646 Waldeck (DE)
(74) Vertreter: v. Bezold & Partner Patentanwälte - PartG mbB

(56) Entgegenhaltungen:
- DE-A1- 4 447 537
- DE-A1-102010 029 844

## Beschreibung

Die Erfindung betrifft ein Dämpfungssystem zur Schwingungsdämpfung und zur Energierückgewinnung aus der Schwingungsdämpfung, zweckmäßig für ein Kraftfahrzeug und eine Antriebsvorrichtung mit einem derartigen Dämpfungssystem.

Aus der DE 44 47 537 A1 ist ein Verfahren zur aktiven Schwingungsdämpfung in Antriebsaggregaten mit wenigstens einer rotierenden Welle, insbesondere Kurbelwelle, bekannt. Dabei werden Drehzahlungleichförmigkeiten der rotierenden Welle und daraus resultierende Störschwingungen dadurch unterhalb vorgegebener Werte gehalten, daß ein auf der Welle sitzendes Schwungrad als bewegtes Grundelement einer elektrischen Maschine verwendet wird, wobei das Schwungrad als passiver Drehschwingungstilger ausgebildet oder ein solcher parallel dazu angeordnet ist. Stand der Technik ist, dass die Verringerung von Torsionsschwingungen von Fahrzeugwellen durch Dämpfer und/oder Tilger geschieht, die die Schwingungsenergie in Wärme umsetzen, die als Abwärme ungenutzt in die Umgebung abgegeben wird. Zum allgemeinen Stand der Technik kann z. B. auf die DE 10 2009 011 084 A1 verwiesen werden.

Eine Aufgabe der Erfindung ist es, die Energieeffizienz eines Kraftfahrzeugs zu verbessern.

Diese Aufgabe kann mit den Merkmalen des Anspruchs 1 gelöst werden. Vorteilhafte Weiterbildungen der Erfindung können den Unteransprüchen und der folgenden Beschreibung entnommen werden.

Die Erfindung schafft ein Dämpfungssystem, vorzugsweise für ein Kraftfahrzeug, zur Schwingungsdämpfung, zweckmäßig Torsionsschwingungsdämpfung, und zur Rückgewinnung von Energie, vorzugsweise in elektrischer Form, aus der Schwingungsdämpfung, insbesondere mittels Umwandlung von mechanischer Energie in elektrische Energie.

Das Dämpfungssystem umfasst eine Welle, die im Betrieb Schwingungen aufweist. Das Dämpfungssystem umfasst einen Dämpfer, wobei der Dämpfer zumindest einen mittels der Welle drehbaren Läufer und zumindest einen mittels der Welle drehbaren Dämpfer-Läufer umfasst. Der zumindest eine Läufer und der zumindest eine Dämpfer-Läufer sind zum vorzugsweise induktiven Zusammenwirken ausgeführt.

Der zumindest eine Läufer ist pendelbar ausgeführt, um zweckmäßig als Pendel zu wirken und/oder die Pendelbewegung der Drehbewegung der Welle zu überlagern, so dass mittels einer Relativbewegung (z. B. einer Verdreh- oder Verschwenkung, zweckmäßig größer 0°) zwischen dem pendelbaren Läufer und dem Dämpfer-Läufer die Schwingung der Welle gedämpft und Energie vorzugsweise mittels Induktion und/oder in elektrischer Form zurückgewonnen werden kann. Die Relativbewegung findet zweckmäßig innerhalb eines Magnetfelds statt.

Das Dämpfungssystem kann zweckmäßig die Amplituden der Schwingungen der Welle dadurch verringern, dass die entzogene Schwingungsenergie als zusätzliche Antriebs- oder Nutzenergie zurückgeführt werden kann.

Die Schwingungsenergie kann vorzugsweise dem kritischen Bereich der Welle entzogen und dem kraftabgebenden Bereich als Nutz- oder Antriebsenergie zurückgeführt werden.

Auch auf der kraftabgebenden Seite können schädigende Frequenzanteile der Schwingung der Welle entzogen und in einem unschädlichen Frequenzbereich als Nutz- oder Antriebsenergie zurückgeführt werden.

Die Energie kann stetig oder temporär zurückgeführt werden. Dabei ist es z. B. möglich, zumindest einen Teil der zurückgewonnenen Energie zwischenzuspeichern.

Das Dämpfungssystem kann derart steuerbar ausgeführt werden, dass in quasi jedem Betriebspunkt eine maximale Dämpfung erreicht wird, was in der Folge zu einem Maximum an zurückgewonnener Antriebs- oder Nutzenergie führt.

Zweckmäßig können der dämpfende und/oder energiegewinnende Teil und der einspeisende Teil des Dämpfungssystems ineinander integriert sein.

Die zurückgewonnene Energie kann auch anderen Aggregaten des Kraftfahrzeugs zumindest teilweise zurückgeführt werden.

Es ist möglich, dass der zumindest eine pendelbare Läufer und der zumindest eine Dämpfer-Läufer unterschiedlich steif an die Drehbewegung der Welle gekoppelt sind. Daraus folgt, dass sich die Drehbewegung der Welle unterschiedlich auf die Drehbewegung des pendelbaren Läufers und die Drehbewegung des Dämpfer-Läufers auswirkt.

Der zumindest eine Dämpfer-Läufer ist vorzugsweise starr an die Drehbewegung der Welle gekoppelt, so dass zweckmäßig die Drehbewegung der Welle zumindest nahezu der Drehbewegung des Dämpfer-Läufers entspricht.

Der zumindest eine Dämpfer-Läufer und der zumindest eine pendelbare Läufer bilden vorzugsweise eine Stator-Rotor-Kombination, mit zumindest einem an die Drehbewegung der Welle starr gekoppeltem Dämpfer-Läufer und zumindest einem nichtstarr und/oder pendelbar an die Drehbewegung der Welle gekoppeltem Läufer.

Der zumindest eine pendelbare Läufer kann eine Spule oder einen Magneten, zweckmäßig einen Permanentmagneten, umfassen. Der zumindest eine Dämpfer-Läufer kann ebenfalls eine Spule oder einen Magneten, zweckmäßig einen Permanentmagneten, umfassen. Der zumindest eine pendelbare Läufer und/oder der zumindest eine Dämpfer-Läufer stellen somit zweckmäßig einen als Generatorläufer ausgeführten Rotor dar.

Es ist möglich, dass zumindest ein Läufer mittels einer Pendellagerung gelagert ist und/oder zumindest abschnittsweise elastisch ausgeführt ist. Mittels geeigneter Elastizität können z. B. relativ weiche oder z. B. relativ steife Läufer ausgebildet werden.

Die Pendellagerung kann vorzugsweise als zumindest eines von Folgenden ausgeführt sein: Drehlagerung, Federlagerung, Elastomerlagerung, Hydrauliklagerung und/oder Piezo-Effekt nutzende Lagerung.

Der zumindest eine pendelbare Läufer umfasst vorzugsweise einen sich relativ zur Welle radial nach außen erstreckenden Drehpendelarm.

Der zumindest eine Läufer kann, vorzugsweise mittels der Pendellagerung, mit der Welle oder einem an die Drehbewegung der Welle gekoppelten Kopplungsteil verbunden sein. Die Pendellagerung kann quasi direkt an der Welle oder dem Kopplungsteil gelagert sein oder in Radialrichtung der Welle vom Außenumfang der Welle beabstandet sein oder in Radialrichtung des Kopplungsteils vom Außenumfang des Kopplungsteils beabstandet sein.

Zumindest zwei Läufer und vorzugsweise zumindest zwei Dämpfer-Läufer sind z. B. in Längsrichtung der Welle hintereinander und vorzugsweise separiert voneinander angeordnet. Alternativ oder ergänzend sind zumindest zwei Läufer aneinandergekoppelt und zweckmäßig über ein und dieselbe Pendellagerung an die Drehbewegung der Welle gekoppelt.

Es ist möglich, dass zumindest zwei Läufer, vorzugsweise inklusive der Pendellagerungen, identisch ausgeführt sind.

Zumindest zwei Läufer unterscheiden sich voneinander durch zumindest eines von Folgenden: Sie sind unterschiedlich steif pendelbar gelagert, sie weisen eine unterschiedliche Pendelmasse (Massenträgheitsmoment) auf, sie weisen eine unterschiedliche Länge auf, sie weisen eine unterschiedliche Elastizität auf, und/oder sie weisen in deren Längsrichtung unterschiedlich große Luftdistanzen zu den Dämpfer-Läufern auf.

Der zumindest eine Läufer und/oder der zumindest eine Dämpfer-Läufer sind zweckmäßig mit einem Elektroterminal versehen, um ein Magnetfeld zu erzeugen. Das Elektroterminal des zumindest einen Läufers kann alternativ oder ergänzend dazu genutzt werden, um ein Überschwingen oder eine Pendelanregung des zumindest einen Läufers zur Krafteinleitung in die Welle zu erzeugen.

Vorzugsweise verfügen zumindest zwei Läufer und/oder zumindest zwei Dämpfer-Läufer über eigene, separate Elektroterminals, um örtlich unterschiedliche Magnetfelder zu erzeugen.

Das Dämpfungssystem umfasst vorzugsweise ein Dämpfer-Gehäuse, das drehfest, insbesondere starr, mit der Welle verbunden ist, den zumindest einen Dämpfer-Läufer trägt und den zumindest einen Läufer trägt und zugleich in seinem Innenraum aufnimmt. Alternativ oder ergänzend kann der Dämpfer-Läufer an oder in einer Wand des Dämpfer-Gehäuses angeordnet sein.

Das Dämpfer-Gehäuse kann vorzugsweise an einem Ende der Welle angeordnet sein.

Es ist möglich, dass zumindest ein pendelbarer Läufer mittels einer Starrlagerung gelagert ist, allerdings wie schon zuvor erwähnt elastisch ausgeführt ist, um trotzdem als Pendel zu wirken.

Zumindest zwei Läufer sind relativ zueinander pendelbar und/oder verdrehbar und können folglich quasi phasenversetzt und/oder mit unterschiedlicher Frequenz schwingen.

Das Dämpfungssystem kann ferner eine Steuereinrichtung aufweisen, mittels der ein Erregerstrom und/oder eine Erregerspannung auf den zumindest einen Läufer und/oder den zumindest einen Dämpfer-Läufer so steuerbar ist, insbesondere erhöhbar oder maximierbar ist, dass eine zweckmäßig maximale Induktion und folglich eine zweckmäßig maximale Schwingungsdämpfung erzielbar ist.

Das Dämpfungssystem kann eine Erfassungseinrichtung zum Erfassen von Drehungleichförmigkeiten (zum Beispiel Schwingungen) der Welle und/oder eines Wellen-Antriebsmotors umfassen, wobei die Steuereinrichtung den Erregerstrom, die Erregerspannung und/oder die Energie-Rückführung in Abhängigkeit der mittels der Erfassungseinrichtung erfassten Drehungleichförmigkeiten steuern kann.

Die zurückgewonnene Energie kann in einem Akkumulator zwischengespeichert werden und/oder einem Fahrzeug-Aggregat als Antrieb- oder Nutzenergie zur Verfügung gestellt werden.

Die mittels des Dämpfungssystems zurückgewonnene Energie kann an die antreibende Seite der Welle zurückgeführt werden, z. B. stetig oder temporär.

Die Steuereinrichtung kann die Rückführung der zurückgewonnenen Energie so steuern, zum Beispiel phasenversetzt und/oder moduliert, dass auf der abtreibenden Seite der Welle ein Minimum an Drehschwingungen entsteht.

Das Merkmal "Steuern" ist im Rahmen der Erfindung breit auszulegen und kann zweckgemäß auch ein "Regeln" umfassen.

Zu erwähnen ist, dass z. B. ein elektromotorisch wirkender Aktuator zur Energierückspeisung verwendet werden kann, der optional so steuerbar ist, dass sich auf der kraftabgebenden Seite ein dämpfender und/oder tilgender Effekt einstellt.

Zu erwähnen ist ferner, dass die Erfindung vorzugsweise Ausführungsformen mit mehreren pendelbaren Läufern und mehreren Dämpfer-Läufern umfasst.

Zu erwähnen ist außerdem, dass die Pendelbewegung des zumindest einen pendelbaren Läufers der Drehbewegung der Welle überlagerbar ist und dadurch insbesondere die Relativbewegung zwischen dem zumindest einen Läufer und dem zumindest einem Dämpfer-Läufer ermöglichbar ist.

Zu erwähnen ist des Weiteren, dass der zumindest eine Läufer und/der der zumindest eine Dämpfer-Läufer vorzugsweise mittelbar mit der Welle verbunden sind, z. B. über das Dämpfer-Gehäuse oder ein anderes Verbindungselement. Es sind allerdings auch Ausführungsformen mit direkter Verbindung möglich.

Die Aufgabe der Erfindung kann ferner gelöst werden durch die Merkmale des Anspruchs 15.

Demnach umfasst die erfindungsgemäße Antriebsvorrichtung, vorzugsweise für ein Fahrzeug, einen als Brennkraftmaschine ausgebildeten Wellenantriebsmotor mit einer als Kurbelwelle ausgebildeten Welle, ein auf der kraftabgebenden Seite der Brennkraftmaschine im Bereich eines axialen Endes der Brennkraftmaschine angeordnetes Schwungrad und ein vorstehend beschriebenes Dämpfungssystem. Dabei ist der Dämpfer des Dämpfungssystems im Bereich eines dem Schwungrad gegenüberliegenden axialen Endes der Kurbelwelle angeordnet.

Durch die Anordnung des Dämpfers eines derartigen Dämpfungssystems im Bereich des dem Schwungrad gegenüberliegenden axialen Endes der Kurbelwelle können insbesondere Torsionsschwingungen der Kurbelwelle reduziert und somit auch Torsionsbrüche vermieden werden. Zudem wird die Drehschwingungsanregung eines Steuerrädertriebs der Brennkraftmaschine minimiert. Dies reduziert die Lautstärke der Brennkraftmaschine. Darüber hinaus wird eine Verringerung der Drehungleichförmigkeit der Kurbelwelle sowie der aus der Massendynamik resultierenden Massenkräfte, welche als Drehmomentschwankungen auf die Kurbelwelle wirken, erreicht..

Zweckmäßigerweise ist der Dämpfer an dem axialen Ende der Kurbelwelle angeordnet.

Die Erfindung ist nicht auf ein Dämpfungssystem und eine Antriebsvorrichtung mit einem derartigen Dämpfungssystem beschränkt, sondern umfasst auch ein Fahrzeug, insbesondere ein Kraft- oder Nutzfahrzeug (z. B. einen Omnibus oder Lastkraftwagen), mit einer Antriebsvorrichtung umfassend ein Dämpfungssystem wie hierin beschrieben.

Die zuvor beschriebenen bevorzugten Ausführungsformen und Merkmale der Erfindung sind beliebig miteinander kombinierbar. Andere vorteilhafte Weiterbildungen der Erfindung sind in den Unteransprüchen offenbart oder ergeben sich aus der folgenden Beschreibung bevorzugter Ausführungsformen der Erfindung in Verbindung mit den beigefügten Figuren.
- Figur 1: zeigt eine schematische Ansicht eines Dämpfungssystems gemäß einer Ausführungsform der Erfindung,
- Figuren 2 bis 6: zeigen unterschiedliche Läufer-Pendellagerungen gemäß Ausführungsformen der Erfindung,
- Figur 7: zeigt eine Querschnittsansicht eines Teils des Dämpfungssystems der Figur 1,
- Figur 8: zeigt eine Detailansicht aus Figur 7, und
- Figur 9: zeigt eine schematische Ansicht einer Antriebsvorrichtung mit dem Dämpfungssystem der Figur 1 mit zugehöriger Verschaltung gemäß einer Ausführungsform der Erfindung.

Die in den Figuren gezeigten Ausführungsformen stimmen teilweise überein, so dass für gleiche oder ähnliche Teile die gleichen Bezugszeichen verwendet sind und zu deren Erläuterung auch auf die Beschreibung der anderen Ausführungsformen verwiesen wird, um Wiederholungen zu vermeiden.

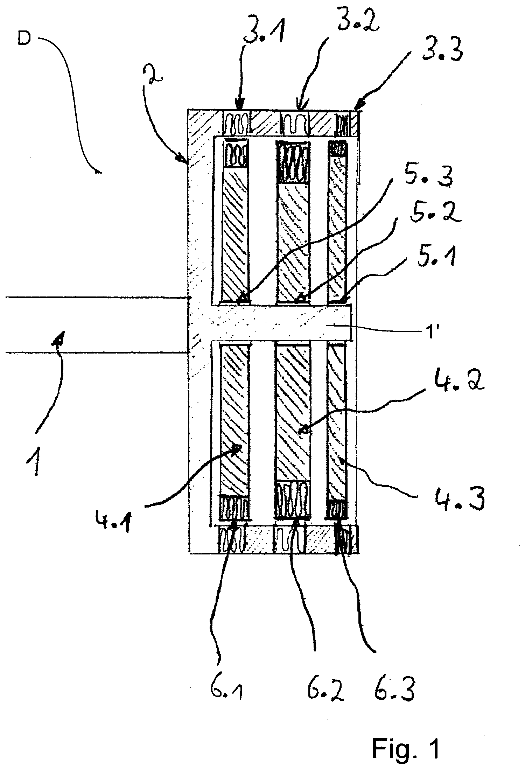

Figur 1 zeigt einen Längsschnitt eines Dämpfungssystems für ein Kraftfahrzeug gemäß einer Ausführungsform der Erfindung. Das Dämpfungssystem dient zur Dämpfung einer Schwingung einer Welle 1, insbesondere einer Wellentorsionsschwingung, und zur Energierückgewinnung aus der Schwingungsdämpfung, mittels Umwandlung von mechanischer Energie in elektrische Energie.

Das Dämpfungssystem umfasst die Welle 1 (z. B. eine Antriebs- oder Kurbelwelle) und einen Dämpfer (D), wobei der Dämpfer (D) mittels der Welle 1 drehbare Dämpfer-Läufer 3.1 bis 3.3 und mittels der Welle 1 drehbare Läufer 4.1 bis 4.3 umfasst. Die Dämpfer-Läufer 3.1 bis 3.3 und die Läufer 4.1 bis 4.3 stellen Rotoren dar, die als Generatorläufer wirken.

Die Läufer 4.1 bis 4.3 und die Dämpfer-Läufer 3.1 bis 3.3 sind zum induktiven Zusammenwirken ausgeführt, wozu sie wahlweise Spulen oder (Permanent-)Magnete und wahlweise Elektroterminals zur Erzeugung eins Magnetfelds umfassen können.

Die Dämpfer-Läufer 3.1 bis 3.3 werden von einem Dämpfer-Gehäuse 2 getragen. Das Dämpfer-Gehäuse 2 ist starr an die Welle 1 und somit starr an die Drehbewegung der Welle 1 gekoppelt. Daraus folgt, dass die Dämpfer-Läufer 3.1 bis 3.3 ebenfalls starr an die Drehbewegung der Welle 1 gekoppelt sind und sich somit zumindest nahezu identisch zur Welle 1 drehen.

Die Läufer 4.1 bis 4.3 sind ebenfalls an die Drehbewegung der Welle 1 gekoppelt. Die Läufer 4.1 bis 4.3 umfassen allerdings Drehpendelarme und sind mittels Pendellagerungen 5.1 bis 5.3 pendelbar gelagert, um als Pendel wirken zu können. Dadurch kann die Drehbewegung der Welle 1 durch die Pendelbewegung der Läufer 4.1 bis 4.3 überlagert werden. Die Drehpendelarme erstrecken sich relativ zu der Welle 1 radial nach außen. Die Pendellagerungen 5.1 bis 5.3 sind auf einem starr mit der Welle 1 verbundenen Kopplungsteil 1' gelagert. Das Kopplungsteil 1' stellt eine axiale Verlängerung der Welle 1 und einen Teil des Dämpfer-Gehäuses 2 dar. Die Läufer 4.1 bis 4.3 sind im Innenraum des Dämpfer-Gehäuses 2 untergebracht. Das Kopplüngsteil 1' kann ein zur Welle 1 separates Teil sein. Allerdings sind ebenso Ausführungsformen möglich, in denen zumindest eine Pendellagerung 5.1 bis 5.3 quasi direkt auf der Welle 1 gelagert ist. Im Rahmen der Erfindung können die Läufer 4.1 bis 4.3, insbesondere die Pendellagerungen 5.1 bis 5.3, somit direkt oder indirekt mit der Welle 1 verbunden sein.

Die Läufer 4.1 bis 4.3 wirken als Drehpendel und beeinflussen zusammen mit den Dämpfer-Läufern 3.1 bis 3.3 die Drehbewegung der Welle 1. Mittels einer in einem Magnetfeld stattfindenden Relativbewegung zwischen den Läufern 4.1 bis 4.3 und den Dämpfer-Läufern 3.1 bis 3.3, insbesondere der Auslenkung der pendelbaren Läufer 4.1 bis 4.3 innerhalb des Magnetfelds relativ zu den Dämpfer-Läufern 3.1 bis 3.3, kann die Schwingung der Welle 1 gedämpft und zugleich elektrische Energie mittels Induktion zurückgewonnen werden. Die Auslenkung der Läufer 4.1 bis 4.3 innerhalb des Magnetfelds führt somit zu einer dämpfenden Beeinflussung der Drehbewegung der Welle 1 und einer induktiven Energierückgewinnung. Mechanische Energie kann somit in elektrische Energie umgewandelt werden, anstatt als Abwärme oder Verlustenergie verloren zu gehen. Selbst ein Anregen und ein damit verbundenes Überschwingen der Läufer 4.1 bis 4.3 zur Krafteinleitung in die Welle 1 ist möglich.

Die Läufer 4.1 bis 4.3 und/oder die Dämpfer-Läufer 3.1 bis 3.3 können mittels eines Erregerstroms zum Aufbau des Magnetfelds veranlasst werden. Der Erregerstrom kann jede beliebige Zeitfunktion annehmen. Die Erreger-Zeitfunktion kann zumindest teilweise so gesteuert werden, dass sich eine maximale Drehschwingungsdämpfung und damit eine maximal rückführbare Energie ergeben. Ebenso kann die Steuerung der rückgeführten Energie diese Maximierung übernehmen. Kombinationen aus beiden Regel-/Steuerstrategien sind möglich.

Die Pendellagerungen 5.1 bis 5.3 verfügen über eine Federsteifigkeit, so dass, in Zusammenhang mit den beteiligten Massenträgheitsmomenten, ein zusätzlicher Tilgereffekt in mindestens einem speziellem Frequenzbereich erzeugt werden kann.

Als energierückspeisendes Teil des Dämpfungssystems kann ein in Figur 1 nicht gezeigter elektromotorisch wirkender Aktuator dienen. Der elektromotorische Aktuator kann zumindest teilweise so gesteuert werden, dass sich auch auf der kraftabgebenden Seite ein dämpfender und/oder tilgender Effekt einstellt.

Die zurückgewonnene Energie aus dem Dämpfungssystem kann in andere Energieformen umgewandelt werden, sie kann zumindest teilweise gespeichert werden oder dem Dämpfungssystem oder allgemein dem Kraftfahrzeug als zusätzliche Nutz- oder Antriebsenergie oder anderen Aggregaten zur Verfügung gestellt werden.

In dem in Figur 1 gezeigten Ausführungsbeispiel weisen die Läufer 4.1 bis 4. 3 unterschiedliche Pendelmassen (Massenträgheitsmomente), unterschiedliche Längen, baulich unterschiedlich Magneten oder Spulen und zumindest geringfügig unterschiedlich große Luftspalte 6.1 bis 6.3 zu den Dämpfer-Läufern 3.1 bis 3.3 auf. Die Pendellagerungen 5.1 bis 5.3 können gleich oder unterschiedlich ausgeführt werden.

Die Läufer 4.1 bis 4.3 sind allesamt über die Pendellagerungen 5.1 bis 5.3 an das Kopplungsteil 1' gekoppelt. In einem nicht gezeigten Ausführungsbeispiel ist es allerdings möglich, dass ein Läufer an einen pendelbaren Läufer gekoppelt ist und letztgenannte Läufer-Kombination über ein und dieselbe Pendellagerung an die Drehbewegung der Welle 1 gekoppelt ist.

Die Läufer 4.1 bis 4.3 bzw. die Dämpfer-Läufer 3.1 bis 3.3 können über ein und dasselbe Elektroterminal mit elektrischer Energie (Strom und/oder Spannung) versorgt werden oder über verschiedene Elektroterminals, wodurch Magnetfelder örtlich unterschiedlich ausgebildet werden können.

Dem Dämpfungssystem kann ferner über das oder die Elektroterminal(s) ein Energieeintrag zugeführt werden, durch einen Impuls, der zu einem Überschwingen der Läufer 4.1 bis 4.3 führt und der Welle 1 damit eine Kraft aufprägt oder induziert.

Mittels der unterschiedlichen und/oder variablen Gestaltung der Magnetfelder kann der Wirkungsgrad der Umwandlung der unerwünschten Drehschwingungen in elektrische Energie verändert oder optimiert werden. Dazu kann grundsätzlich gelten:
- Höhere Wellen- oder Motordrehzahl führt zur Aktivierung der steiferen Läufer (Pendel) 4.1 bis 4.3,
- Niedrigere Wellen- oder Motordrehzahl führt zur Aktivierung der weicheren Läufer (Pendel) 4.1 bis 4.3,
- Höhere Wellen- oder Motordrehzahl führt zur Aktivierung der Läufer (Pendel) 4.1 bis 4.3 mit geringerer Masse,
- Niedrigere Wellen- oder Motordrehzahl führt zur Aktivierung der Läufer (Pendel) 4.1 bis 4.3 mit höherer Masse.

Diese Verhältnisse gelten sowohl bei Energieeintrag als auch bei Energieaustrag.

Die Bestromung und/oder Aktivierung der zweckmäßig unterschiedlichen Magnetfelder kann über eine Regelung oder Steuerung erfolgen, welche zumindest einen
Sensor für die segmentzeitabhängige Drehzahlerfassung verwendet. Letztgenannter Sensor kann zweckmäßig ein "Unrundlaufen oder Drehschwingungen" detektieren und folglich auch die Wirkungsweise des Dämpfungssystems überwachen und/oder steuern.

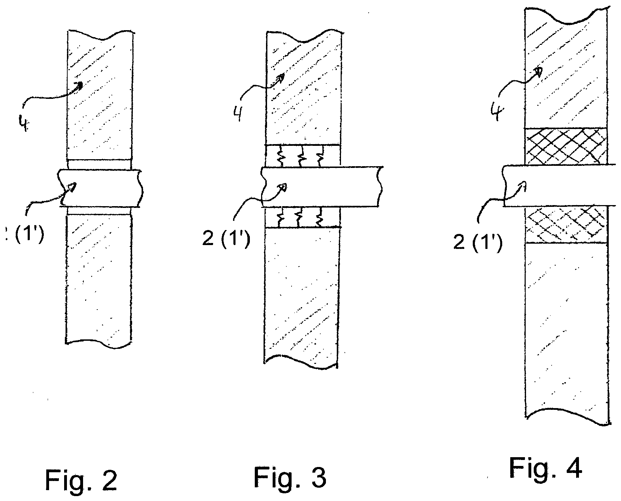

Figur 2 zeigt eine als Drehlagerung ausgeführte Pendellagerung. Die Drehlagerung zeichnet sich durch Folgendes aus: rotatorisch frei beweglich, Steifigkeit C = 0, Dämpfung D = 0 oder zumindest gering, keine Tilgerwirkung durch die Pendellagerung.

Figur 3 zeigt eine als Federlagerung ausgeführte Pendellagerung. Die Federlagerung zeichnet sich durch Folgendes aus: angekoppelt über Drehfedern der Steifigkeit C > 0, Dämpfung D gering.

Figur 4 zeigt eine als Elastomerlagerung ausgeführte Pendellagerung. Die Pendellagerung zeichnet sich durch Folgendes aus: Ankopplung durch Elastomer-Drehfedern, Steifigkeit C > 0 und über Form und/oder Shore-Härte der Elastomer-Drehfedern einstellbar, Dämpfung D einstellbar über Verlustfaktor des Elastomers.

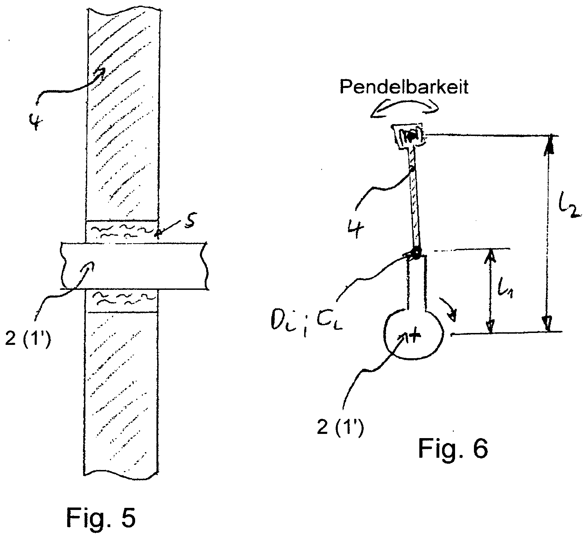

Figur 5 zeigt eine als Hydrauliklagerung ausgeführte Pendellagerung. Die Hydrauliklagerung zeichnet sich durch Folgendes aus: hydraulisch angekoppelt, Steifigkeit C und Dämpfung D über (Spalt-)Maß S und Viskosität des Fluids einstellbar, Steifigkeit C und Dämpfung D können durch Verdrängen des Fluids und/oder Fluidscherung erzeugt werden.

Figur 6 zeigt eine Pendellagerung, die in Radialrichtung der Welle 1 oder des Kopplungsteils 1' vom Außenumfang derselben beabstandet ist. Diese Pendellagerung zeichnet sich durch zumindest eines von Folgenden aus: drehzahladaptiv, Tilgerfrequenz folgt der Rotationsfrequenz der Welle 1 und damit des Dämpfer-Gehäuses 2 mit Faktor f, wobei f durch das Verhältnis L₂/L₁ sowie D_{I}, C_{I} (Dämpfung und Steifigkeit der Pendellagerung) einstellbar ist.

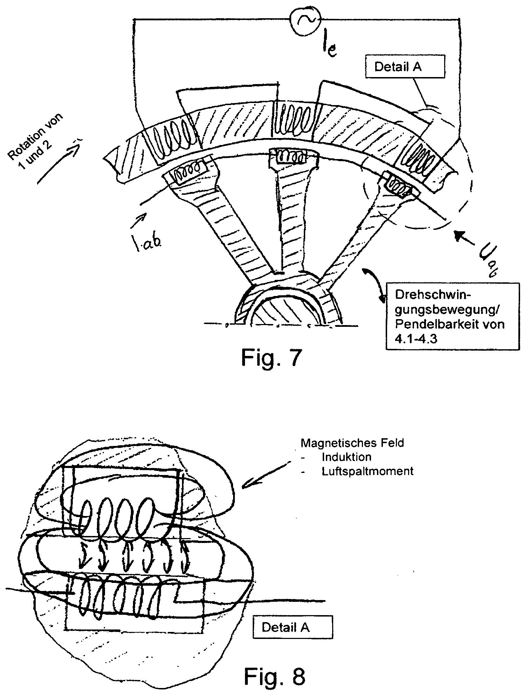

Figur 7 zeigt eine Querschnittsansicht eines Teils des Dämpfungssystems der Figur 1, während Figur 8 die Detailansicht A aus Figur 7 darstellt.

Unter Bezugnahme auf die Figuren 7 und 8 wird durch einen Erregerstrom Iₑ auf die Dämpfer-Läufer 3.1 bis 3.3 ein magnetisches Feld erzeugt, wobei Iₑ zeitlich konstant oder eine Funktion mehrerer Variablen sein kann. Das magnetische Feld bewirkt ein Luftspaltmoment im Luftspalt zwischen den Läufern 4.1 bis 4.3 und den Dämpfer-Läufern 3.1 bis 3.3, insbesondere zwischen deren Spulen und Magneten. Beginnt die Welle 1 ungleichmäßig zu rotieren, ändert sich die Position zwischen den pendelbaren Läufern 4.1 bis 4.3 und den Dämpfer-Läufern 3.1 bis 3.3. Die pendelbaren Läufer 4.1 bis 4.3 pendeln im magnetischen Feld der Dämpfer-Läufer 3.1 bis 3.3. Dadurch wird eine Spannung induziert, die mit der Drehungleichförmigkeit ansteigt. Das Luftspaltmoment steigt mit zunehmender Relativbewegung, und die abgeführte Leistung P = I_{ab} • U_{ab} bewirkt eine Drehschwingungsdämpfung.

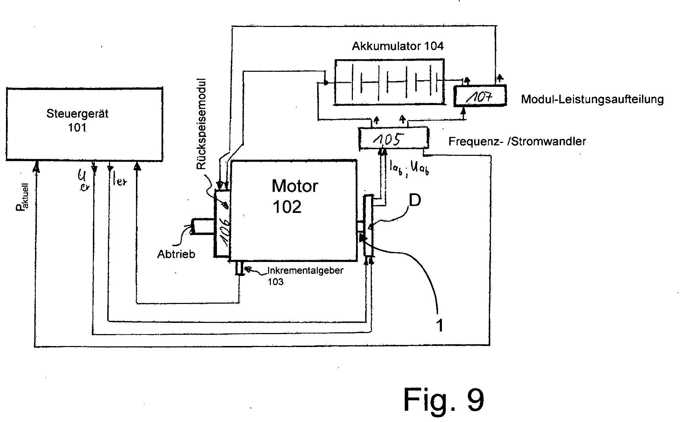

Figur 9 zeigt eine schematische Ansicht einer Antriebsvorrichtung mit dem Dämpfungssystem der Figur 1 mit zugehöriger Verschaltung gemäß einer Ausführungsform der Erfindung.

Die Antriebsvorrichtung für ein Fahrzeug umfasst einen als Brennkraftmaschine ausgebildeten Wellenantriebsmotor (102) mit einer als Kurbelwelle ausgebildeten Welle (1), ein auf der kraftabgebenden Seite der Brennkraftmaschine im Bereich eines axialen Endes der Brennkraftmaschine angeordnetes Schwungrad (nicht dargestellt) und ein Dämpfungssystem. Der Dämpfer (D) des Dämpfungssystems ist an dem dem Schwungrad gegenüberliegenden axialen Ende der Kurbelwelle angeordnet. Ein Steuergerät 101 bekommt von einer Erfassungseinrichtung 103 zum Erfassen einer Drehungleichförmigkeit der Kurbelwelle oder der Brennkraftmaschine Informationen über die Drehungleichförmigkeit. Die Erfassungseinrichtung 103 kann als Impuls- oder Inkrementgeber ausgeführt sein. Das Steuergerät 101 steuert danach die Spannung Uₑᵣ und den Strom Iₑᵣ so, dass die Stromstärke I_{ab} und die Spannung U_{ab} im zugehörigen Betriebspunkt zweckmäßig maximal werden. Damit kann auch die Dämpfung des Dämpfungssystems zweckmäßig maximiert werden. Ein Frequenz-/Stromwandler 105 passt den Spannungs-/Stromverlauf so an, dass ein Akkumulator 104 und ein Energie-Rückspeisungsmodul 106 optimal gespeist werden. Eine Einrichtung 107 zur Leistungsaufteilung steuert die Energiebilanz auf den Akkumulator 104 und das Rückspeisungsmodul 106 und kann aktiv, durch Phasenversatz, Drehschwingungen am Abtrieb und/oder durch modulierte Leistungsabgabe auf das Rückspeisemodul 106 zusätzlich wirksam reduziert werden.

Durch die Anordnung des Dämpfers (D) eines derartigen Dämpfungssystems im Bereich des dem Schwungrad gegenüberliegenden axialen Endes der Kurbelwelle werden Torsionsschwingungen der Kurbelwelle reduziert, wodurch auch Torsionsbrüche vermieden werden. Zudem wird die Drehschwingungsanregung des Steuerrädertriebs (nicht dargestellt) der Brennkraftmaschine minimiert. Dies reduziert die Lautstärke der Brennkraftmaschine. Darüber hinaus wird eine Verringerung der Drehungleichförmigkeit der Kurbelwelle sowie der aus der Massendynamik resultierenden Massenkräfte, welche als Drehmomentschwankungen auf die Kurbelwelle wirken, erreicht.

Mittels der Drehschwingungsdämpfung des Dämpfungssystems kann ferner z. B. Folgendes realisiert werden: eine leichter gebaute Kurbelwelle, eine Entlastung von Riemenspannern im Riementrieb und/oder akustische Verbesserungen durch gleichmäßigere Befeuerung der Kraftfahrzeug-Zylinder.

Die Erfindung ist nicht auf die oben beschriebenen bevorzugten Ausführungsformen beschränkt. Vielmehr ist eine Vielzahl von Varianten und Abwandlungen möglich, die ebenfalls von dem Erfindungsgedanken Gebrauch machen und deshalb in den Schutzbereich fallen, der durch die Patentansprüche definiert wird. Darüber hinaus beansprucht die Erfindung auch Schutz für den Gegenstand der Unteransprüche.

### Bezugszeichenliste

- 1: Welle
- 1': Kopplungsteil, z. B. Wellenverlängerung
- 2: Dämpfer-Gehäuse
- 3.1 bis 3.3: Dämpfer-Läufer
- 4.1 bis 4.3: Pendelbarer Läufer
- 5.1 bis 5.3: Pendellagerung
- 6.1 bis 6.3: Luftspalt
- 101: Steuergerät
- 102: Wellen-Antriebsmotor
- 103: Erfassungseinrichtung
- 104: Akkumulator
- 105: Frequenz-/Stromwandler
- 106: Energie-Rückspeisemodul
- 107: Einrichtung zur Leistungsaufteilung
- D: Dämpfer
- U: Spannung
- I: Stromstärke

## Patentansprüche

1. Dämpfungssystem, vorzugsweise für ein Fahrzeug, zur Schwingungsdämpfung, vorzugsweise Torsionsschwingungsdämpfung, und zur Energierückgewinnung aus der Schwingungsdämpfung, umfassend einen Dämpfer (D) und eine Welle (1), wobei der Dämpfer (D) zumindest einen mittels der Welle (1) drehbaren Läufer (4.1-4.3) zum Zusammenwirken mit zumindest einen mittels der Welle (1) drehbaren Dämpfer-Läufer (3.1-3.3) umfasst, wobei der zumindest eine Läufer (4.1-4.3) pendelbar ausgeführt ist, so dass mittels einer Relativbewegung zwischen dem zumindest einen Läufer (4.1-4.3) und dem zumindest einen Dämpfer-Läufer (3.1-3.3) die Schwingung der Welle (1) dämpfbar und Energie zurückgewinnbar ist, **dadurch gekennzeichnet, dass**
zumindest zwei Läufer (4.1-4.3) sich durch zumindest eines von folgenden voneinander unterscheiden:
- sie sind unterschiedlich steif pendelbar gelagert,
- sie weisen eine unterschiedliche Pendelmasse auf,
- sie weisen eine unterschiedliche Länge auf,
- sie weisen in deren Längsrichtung unterschiedlich große Distanzen zu den Dämpfer-Läufern (3.1-3.3) auf,
- sie weisen eine unterschiedliche Elastizität auf; und/oder
zumindest zwei Läufer (4.1-4.3)
- relativ zueinander pendelbar und/oder verdrehbar ausgeführt sind,
- hintereinander und vorzugsweise separiert voneinander angeordnet sind und/oder
- aneinandergekoppelt sind und über ein und dieselbe Pendellagerung (5.1-5.3) an die Drehbewegung der Welle (1) gekoppelt sind.-

2. Dämpfungssystem nach Anspruch 1, wobei der zumindest eine Läufer (4.1-4.3) und der zumindest eine Dämpfer-Läufer (3.1-3.3) unterschiedlich steif an die Drehbewegung der Welle (1) gekoppelt sind, vorzugsweise ist der Dämpfer-Läufer (3.1-3.3) starr an die Drehbewegung der Welle (1) gekoppelt ist.

3. Dämpfungssystem nach einem der vorhergehenden Ansprüche, wobei zumindest ein Läufer (4.1-4.3) mittels einer Pendellagerung (5.1-5.3) gelagert ist und/oder elastisch ausgeführt ist.

4. Dämpfungssystem nach einem der vorhergehenden Ansprüche, wobei zumindest ein Läufer (4.1-4.3) mittels einer als Drehlagerung, als Federlagerung, als Elastomerlagerung, als Hydrauliklagerung und/oder als einen Piezo-Effekt nutzenden Lagerung ausgeführten Pendellagerung (5.1-5.3) gelagert ist.

5. Dämpfungssystem nach einem der vorhergehenden Ansprüche, wobei der zumindest eine Läufer (4.1-4.3) einen sich radial nach außen erstreckenden Drehpendelarm umfasst.

6. Dämpfungssystem nach Anspruch 4 oder 5, wobei zumindest ein Läufer (4.1-4.3) über die Pendellagerung (5.1-5.3) mit der Welle (1) oder einem an die Drehbewegung der Welle (1) gekoppelten Kopplungsteil (1') verbunden ist und die Pendellagerung (5.1-5.3) in Radialrichtung der Welle (1) vom Außenumfang der Welle (1) beabstandet ist oder die Pendellagerung (5.1-5.3) in Radialrichtung des Kopplungsteils (1') vom Außenumfang des Kopplungsteils (1') beabstandet ist.

7. Dämpfungssystem nach einem der vorhergehenden Ansprüche, wobei zumindest zwei Läufer (4.1-4.3) und/oder zumindest zwei Dämpfer-Läufer (3.1-3.3) über eigene Elektroterminals verfügen, um örtlich unterschiedliche Magnetfelder zu erzeugen.

8. Dämpfungssystem nach einem der vorhergehenden Ansprüche, mit einem Dämpfer-Gehäuse (2), das drehfest mit der Welle (1) verbunden ist, den zumindest einen Läufer (4.1-4.3) in seinem Innenraum aufnimmt und den zumindest einen Dämpfer-Läufer (3.1-3.3) trägt ist, vorzugsweise wird zumindest einer der Läufer (4.1-4.3) vom Dämpfer-Gehäuse (2) getragen.

9. Dämpfungssystem nach einem der vorhergehenden Ansprüche, wobei zumindest ein Läufer (4.1-4.3) mittels einer Starrlagerung gelagert, aber elastisch ausgeführt ist.

10. Dämpfungssystem nach einem der vorhergehenden Ansprüche, mit einer Steuereinrichtung, mittels der ein Erregerstrom und/oder eine Erregerspannung auf den zumindest einen Läufer (4.1-4.3) und/oder den zumindest einen Dämpfer-Läufer (3.1-3.3) steuerbar ist, um eine Induktion und folglich die Schwingungsdämpfung zu verändern, vorzugsweise zu maximieren.

11. Dämpfungssystem nach einem der vorhergehenden Ansprüche, wobei die zurückgewonnene Energie an die antreibende Seite der Welle (1) zurückgeführt wird, vorzugsweise stetig oder temporär, und eine Steuereinrichtung die Rückführung so steuert, dass auf der abtreibenden Seite der Welle (1) ein Minimum an Drehschwingungen entsteht.

12. Dämpfungssystem nach Anspruch 11, mit einer Erfassungseinrichtung (103) zum Erfassen von Drehungleichförmigkeiten der Welle (1) und/oder eines Wellen-Antriebsmotors, wobei die Steuereinrichtung den Erregerstrom, die Erregerspannung und/oder die Energie-Rückführung in Abhängigkeit der mittels der Erfassungseinrichtung (103) erfassten Drehungleichförmigkeiten steuert.

13. Antriebsvorrichtung, vorzugsweise für ein Fahrzeug, umfassend einen als Brennkraftmaschine ausgebildeten Wellenantriebsmotor (102) mit einer als Kurbelwelle ausgebildeten Welle (1), ein auf der kraftabgebenden Seite der Brennkraftmaschine im Bereich eines axialen Endes der Brennkraftmaschine angeordnetes Schwungrad und ein Dämpfungssystem nach einem der vorhergehenden Ansprüche, wobei der Dämpfer (D) des Dämpfungssystems im Bereich eines dem Schwungrad gegenüberliegenden axialen Endes der Kurbelwelle angeordnet ist.

14. Antriebsvorrichtung nach Anspruch 13, wobei dar Dämpfer (D) an dem axialen Ende der Kurbelwelle angeordnet ist.

15. Fahrzeug, vorzugsweise Nutzfahrzeug, mit einer Antriebsvorrichtung nach einem der Ansprüche 13 und 14.

## Claims

1. A damping system, preferably for a vehicle, for vibration damping, preferably torsional vibration damping, and for energy recovery from the vibration damping, comprising a damper (D) and a shaft (1), the damper (D) comprising at least one rotor (4.1-4.3) which can be rotated by means of the shaft (1) for interacting with at least one damper rotor (3.1-3.3) which can be rotated by means of the shaft (1), the at least one rotor (4.1-4.3) being configured such that it can swing, with the result that the vibration of the shaft (1) can be damped by means of a relative movement between the at least one rotor (4.1-4.3) and the at least one damper rotor (3.1-3.3) and energy can be recovered, **characterized in that** at least two rotors (4.1-4.3) differ from one another by way of at least one of the following:
- they are mounted with different rigidity such that they can swing,
- they have a different pendulum mass,
- they have a different length,
- they are at distances of different magnitude in their longitudinal direction from the damper rotors (3.1-3.3),
- they have a different elasticity; and/or
at least two rotors (4.1-4.3)
- are configured such that they can swing and/or rotate relative to one another,
- are arranged behind one another and preferably in a separated manner from one another, and/or
- are coupled to one another and are coupled to the rotational movement of the shaft (1) via one and the same swinging bearing system (5.1-5.3).

2. The damping system according to Claim 1, the at least one rotor (4.1-4.3) and the at least one damper rotor (3.1-3.3) are coupled with different rigidity to the rotational movement of the shaft (1), and the damper rotor (3.1-3.3) is preferably coupled rigidly to the rotational movement of the shaft (1).

3. The damping system according to either of the preceding claims, at least one rotor (4.1-4.3) being mounted by means of a swinging bearing system (5.1-5.3) and/or being of elastic configuration.

4. The damping system according to one of the preceding claims, at least one rotor (4.1-4.3) being mounted by means of a swinging bearing system (5.1-5.3) which is configured as a rotational bearing system, as a spring bearing system, as an elastomeric bearing system, as a hydraulic bearing system and/or as a bearing system which utilizes a piezoelectric effect.

5. The damping system according to one of the preceding claims, the at least one rotor (4.1-4.3) comprising a rotating pendulum arm which extends radially to the outside.

6. The damping system according to Claim 4 or 5, at least one rotor (4.1-4.3) being connected via the swinging bearing system (5.1-5.3) to the shaft (1) or a coupling part (1') which is coupled to the rotational movement of the shaft (1), and the swinging bearing system (5.1-5.3) being spaced apart in the radial direction of the shaft (1) from the outer circumference of the shaft (1), or the swinging bearing system (5.1-5.3) being spaced apart in the radial direction of the coupling part (1') from the outer circumference of the coupling part (1').

7. The damping system according to one of the preceding claims, at least two rotors (4.1-4.3) and/or at least two damper rotors (3.1-3.3) having dedicated electric terminals, in order to generate different magnetic fields locally.

8. The damping system according to one of the preceding claims, having a damper housing (2) which is connected to the shaft (1) fixedly so as to rotate with it, receives the at least one rotor (4.1-4.3) in its interior, and carried the at least one damper rotor (3.1-3.3), at least one of the rotors (4.1-4.3) preferably being carried by the damper housing (2).

9. The damping system according to one of the preceding claims, at least one rotor (4.1-4.3) being mounted by means of a rigid bearing system, but being of elastic configuration.

10. The damping system according to one of the preceding claims, having a control device, by means of which an exciter current and/or an exciter voltage can be applied in a controlled manner to the at least one rotor (4.1-4.3) and/or the at least one damper rotor (3.1-3.3), in order to change, preferably to maximize, an induction and, as a consequence, the vibration damping.

11. The damping system according to one of the preceding claims, the recovered energy being returned to the driving side of the shaft (1), preferably constantly or temporarily, and a control device controlling the return in such a way that a minimum of torsional vibrations are produced on the output side of the shaft (1).

12. The damping system according to Claim 11, having a detection device (103) for detecting rotational nonuniformities of the shaft (1) and/or a shaft drive motor, the control device controlling the exciter current, the exciter voltage and/or the energy recirculation in a manner which is dependent on the rotational nonuniformities which are detected by means of the detection device (103).

13. A drive apparatus, preferably for a vehicle, comprising a shaft drive motor (102) which is configured as an internal combustion engine with a shaft (1) which is configured as a crankshaft, further comprising a flywheel which is arranged on the power output side of the internal combustion engine in the region of one axial end of the internal combustion engine, and a damper system according to one of the preceding claims, the damper (D) of the damping system being arranged in the region of an axial end of the crankshaft, which axial end lies opposite the flywheel.

14. The drive apparatus according to Claim 13, the damper (D) being arranged at the axial end of the crankshaft.

15. A vehicle, preferably commercial vehicle, having a drive apparatus according to either of Claims 13 and 14.

## Revendications

1. Système d'amortissement, de préférence pour un véhicule, servant à l'amortissement de vibrations, de préférence à l'amortissement de vibrations de torsion, et à la récupération d'énergie à partir de l'amortissement de vibrations, comportant un amortisseur (D) et un arbre (1), l'amortisseur (D) comportant au moins un rotor (4.1-4.3) pouvant être entraîné en rotation au moyen de l'arbre (1) et destiné à coopérer avec au moins un rotor d'amortisseur (3.1-3.3) pouvant être entraîné en rotation au moyen de l'arbre (1), l'au moins un rotor (4.1-4.3) étant réalisé de manière à pouvoir osciller, de telle sorte que, grâce à un mouvement relatif entre l'au moins un rotor (4.1-4.3) et l'au moins un rotor d'amortisseur (3.1-3.3), la vibration de l'arbre (1) peut être amortie et de l'énergie peut être récupérée, **caractérisé en ce que**
au moins deux rotors (4.1-4.3) diffèrent les uns des autres de par au moins l'un des faits suivants :
- ils sont montés de manière à pouvoir osciller avec une rigidité différente,
- ils présentent une masse pendulaire différente,
- ils présentent une longueur différente,
- ils présentent dans leur direction longitudinale des distances différentes aux rotors d'amortisseur (3.1-3.3),
- ils présentent une élasticité différente ; et/ou
au moins deux rotors (4.1-4.3)
- sont réalisés de manière à pouvoir osciller et/ou tourner les uns par rapport aux autres,
- sont disposés les uns derrière les autres et de préférence séparément les uns des autres et/ou
- sont accouplés les uns aux autres et sont couplés au mouvement rotatif de l'arbre (1) par le biais d'un seul et même palier oscillant (5.1-5.3).

2. Système d'amortissement selon la revendication 1, dans lequel l'au moins un rotor (4.1-4.3) et l'au moins un rotor d'amortisseur (3.1-3.3) sont couplés au mouvement rotatif de l'arbre (1) suivant une rigidité différente, et de préférence le rotor d'amortisseur (3.1-3.3) est couplé rigidement au mouvement rotatif de l'arbre (1).

3. Système d'amortissement selon l'une des revendications précédentes, dans lequel au moins un rotor (4.1-4.3) est monté au moyen d'un palier oscillant (5.1-5.3) et/ou est réalisé de manière élastique.

4. Système d'amortissement selon l'une des revendications précédentes, dans lequel au moins un rotor (4.1-4.3) est monté au moyen d'un palier oscillant (5.1-5.3) réalisé sous forme de palier rotatif, de palier élastique, de palier élastomère, de palier hydraulique et/ou de palier utilisant un effet piézoélectrique.

5. Système d'amortissement selon l'une des revendications précédentes, dans lequel l'au moins un rotor (4.1-4.3) comporte un bras oscillant rotatif s'étendant radialement vers l'extérieur.

6. Système d'amortissement selon la revendication 4 ou 5, dans lequel au moins un rotor (4.1-4.3) est relié, par le biais du palier oscillant (5.1-5.3), à l'arbre (1) ou à une partie d'accouplement (1') couplée au mouvement rotatif de l'arbre (1) et
le palier oscillant (5.1-5.3) est espacé de la périphérie extérieure de l'arbre (1) dans la direction radiale de l'arbre (1) ou le palier oscillant (5.1-5.3) est espacé de la périphérie extérieure de la partie d'accouplement (1') dans la direction radiale de la partie d'accouplement (1').

7. Système d'amortissement selon l'une des revendications précédentes, dans lequel au moins deux rotors (4.1-4.3) et/ou au moins deux rotors d'amortisseur (3.1-3.3) comportent des bornes électriques propres afin de générer des champs magnétiques spatialement différents.

8. Système d'amortissement selon l'une des revendications précédentes, comprenant un boîtier d'amortisseur (2) qui est relié de manière solidaire en rotation à l'arbre (1), reçoit l'au moins un rotor (4.1-4.3) dans son espace intérieur et l'au moins un rotor d'amortisseur (3.1-3.3) est supporté, de préférence au moins l'un des rotors (4.1-4.3) est supporté par le boîtier d'amortisseur (2).

9. Système d'amortissement selon l'une des revendications précédentes, dans lequel au moins un rotor (4.1-4.3) est monté au moyen d'un palier rigide, mais est réalisé de manière élastique.

10. Système d'amortissement selon l'une des revendications précédentes, comprenant un dispositif de commande au moyen duquel un courant d'excitation et/ou une tension d'excitation sur l'au moins un rotor (4.1-4.3) et/ou l'au moins un rotor d'amortisseur (3.1-3.3) peuvent être commandés, afin de modifier, de préférence de maximiser, une induction et par conséquent l'amortissement de vibrations.

11. Système d'amortissement selon l'une des revendications précédentes, dans lequel l'énergie récupérée est renvoyée au côté d'entraînement de l'arbre (1), de préférence en continu ou temporairement, et un dispositif de commande commande la récupération de telle sorte qu'un minimum de vibrations rotationnelles se produise sur le côté de sortie de l'arbre (1).

12. Système d'amortissement selon la revendication 11, comprenant un dispositif de détection (103) pour détecter des irrégularités de rotation de l'arbre (1) et/ou d'un moteur d'entraînement d'arbre, dans lequel le dispositif de commande commande le courant d'excitation, la tension d'excitation et/ou la récupération d'énergie en fonction des irrégularités de rotation détectées au moyen du dispositif de détection (103).

13. Dispositif d'entraînement, de préférence pour un véhicule, comportant un moteur d'entraînement d'arbre (102) réalisé sous forme de moteur à combustion interne et doté d'un arbre (1) réalisé sous forme de vilebrequin, un volant d'inertie disposé sur le côté de transmission de force du moteur à combustion interne dans la région d'une extrémité axiale du moteur à combustion interne et un système d'amortissement selon l'une des revendications précédentes, dans lequel l'amortisseur (D) du système d'amortissement est disposé dans la région d'une extrémité axiale du vilebrequin opposée au volant d'inertie.

14. Dispositif d'entraînement selon la revendication 13, dans lequel l'amortisseur (D) est disposé à l'extrémité axiale du vilebrequin.

15. Véhicule, de préférence véhicule utilitaire, comprenant un dispositif d'entraînement selon l'une des revendications 13 et 14.
